# FASCICULE DE BREVET EUROPEEN

(11) **EP 0 362 092 B1**
(45) Date de publication et mention de la délivrance du brevet: **31.03.1993**
(21) Numéro de dépôt: 89440007.6
(22) Date de dépôt: 24.01.1989
(51) Int. Cl.: B60P 3/22

(54) **Citerne cylindrique pour le transport en vrac de produits fins**
Zylindrischer Behälter zum Transport von feinem Schüttgut
Cylindrical cistern for transporting fine products in bulk

(30) Priorité: 30.09.1988 FR 8812999
(43) Date de publication de la demande: 04.04.1990
(73) Titulaire: SPITZER-EUROVRAC SàRL, F-67640 Fegersheim (FR)
(72) Inventeur: Rappold, Pierre, F-67640 Fegersheim (FR); Gantzer, Patrick, F-67490 Dettwiller (FR); Spitzer, Udo, F-67640 Lipsheim (FR)
(74) Mandataire: Arbousse-Bastide, Jean-Claude Philippe

(56) Documents cités:
- EP-A- 0 251 958
- FR-A- 1 408 059

## Description

La présente invention a pour objet une citerne cylindrique pour le transport en vrac de produits fins.

On sait que les produits fins sont fréquemment transportés en vrac dans des citernes basculantes installées sur un châssis de véhicule semi-remorque, les citernes les plus couramment utilisées à cette fin étant des citernes cylindriques dont la partie avant est fermée par un fond bombé normalisé solidarisé au vérin hydraulique qui actionne son basculement.

Toutefois l'installation, sur la partie avant du châssis du véhicule, de ce vérin hydraulique, fréquemment associé à un second vérin du même type, entraîne un encombrement qui limite l'espace imparti à la citerne, et par voie de conséquence son volume.

Le problème se posait donc de mieux exploiter l'espace délimité par le porte-à-faux du vérin élévateur et le pivot d'attelage du semi-remorque avec le véhicule tracteur.

Une solution à ce problème a été proposée par la Demanderesse dans sa demande de brevet européen EP-A-0251958, cette solution consistant à interposer entre le corps cylindrique de la citerne et le fond bombé normalisé destiné à la fermer à sa partie avant une virole taillée en onglet, fixée par soudage à l'un et à l'autre.

Ce dispositif permettait d'augmenter sensiblement le volume utile de la citerne en faisant appel à des moyens peu onéreux et simples à réaliser en chaudronnerie.

La présente invention a pour but de proposer une citerne cylindrique dont le volume utile est encore sensiblement augmenté par rapport à celui de la citerne qui fait l'objet de la demande précitée.

La présente invention a ainsi pour objet une citerne cylindrique pour le transport en vrac de produits fins, cette citerne présentant la caractéristique essentielle de comporter à la moitié supérieure de son extrémité antérieure une pièce rapportée disposée entre la cuve cylindrique et le fond bombé normalisé, et constituée d'une virole taillée en onglet obtenue par découpage de la moitié inférieure de la même extrémité de la cuve cylindrique.

L'utilisation d'une virole obtenue par découpage de la moitié inférieure de la cuve cylindrique présente l'avantage supplémentaire de ne pas nécessiter d'apport extérieur de tôle pour réaliser l'assemblage, en même temps que d'éviter toute perte de matériau.

L'invention sera mieux comprise à la lumière de la description qui suit et qui se réfère au dessin annexé, étant bien entendu que cette description ne présente aucun caractère limitatif vis-à-vis de la présente invention.

Dans le dessin annexé :
- la figure 1 représente la partie antérieure d'une citerne selon l'invention.
- la figure 2 représente la partie antérieure de la citerne objet de la demande de brevet européen précitée.

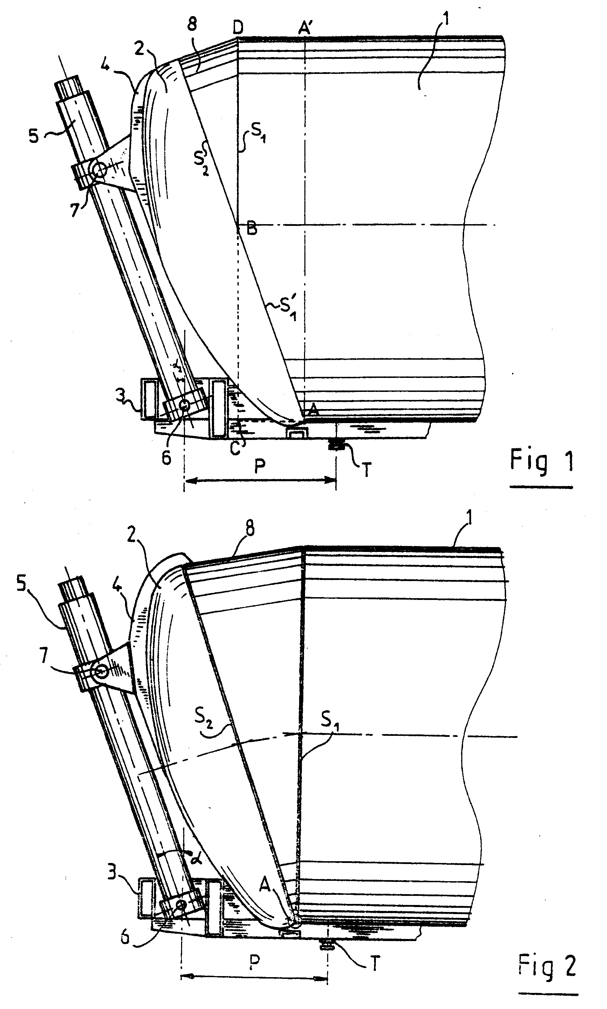

Si on se réfère d'abord à la figure 1, on voit la cuve cylindrique 1 de la citerne prolongée par un fond bombé normalisé 2 muni d'une ferrure 4 en forme de chape reliée au vérin élévateur 5 au moyen de tourillons 7 autour desquels la ferrure 4 peut osciller.

Le vérin 5 est incliné vers l'avant d'un angle et sa base est montée également sur des tourillons 6 autour desquels il peut osciller.

Le vérin 5, une partie de la cuve 1 et le fond bombé normalisé 2 se trouvent en porte-à-faux dans le châssis 3 d'une certaine longueur P par rapport au pivot d'attelage T qui constitue le point d'appui avant de la semi-remorque.

Le découpage préalable de la partie inférieure de la cuve cylindrique 1 selon ABC fournit une tôle dont un usinage ultérieur approprié conduit à une tôle 8 approximativement taillée en onglet, de manière à pouvoir être insérée entre la section supérieure semi-circulaire S₁ de la cuve 1 et la section S₂ circulaire du fond bombé 2, laquelle vient en outre s'ajuster avec la section S′₁ de la cuve provenant de son découpage selon ABC.

La tôle 8 est fixée par soudure à la cuve 1 et au fond bombé 2, la moitié inférieure de ce dernier étant également fixée par soudure à la section S′₁ de la cuve.

Si on se réfère ensuite à la figure 2, on voit la cuve cylindrique 1 de la citerne et la virole 8 taillée en onglet interposée entre la cuve 1 et le fond bombé normalisé 2.

Ainsi qu'on le voit clairement en comparant les figures 1 et 2, la réalisation de la citerne selon l'invention permet la mise en oeuvre d'une cuve cylindrique dont la longueur est supérieure d'au moins celle du segment A′D à la longueur de la cuve de la citerne décrite au brevet précité, cette réalisation conduisant à une citerne dont le volume utile est supérieur à celui de la citerne décrite au brevet précité.

Un autre avantage de la citerne selon l'invention réside, ainsi qu'il a déjà été dit, dans l'utilisation de la tôle découpée dans la moitié inférieure de la cuve pour réaliser la tôle d'assemblage insérée entre sa partie supérieure et le fond bombé normalisé, dispensant d'un apport extérieur de tôle pour réaliser ledit assemblage.

## Revendications

1. Citerne cylindrique pour le transport en vrac de produits fins, caractérisée en ce qu'elle comporte à la moitié supérieure de son extrémité antérieure une pièce rapportée (8) disposée entre la cuve cylindrique (1) et le fond bombé normalisé (2) et constituée d'une virole taillée en onglet obtenue par découpage de la moitié inférieure de la même extrémité de la cuve cylindrique (1) suivi d'un usinage approprié.

2. Procédé de fabrication d'une citerne cylindrique selon la revendication 1, caractérisé en ce qu'il consiste à découper une virole (8) à la moitié inférieure de l'extrémité antérieure d'une cuve cylindrique (1) et à insérer cette virole (8), après usinage, entre la moitié supérieure de cette même extrémité de la cuve cylindrique (1) et un fond bombé normalisé (2), qui est fixé par soudage à la virole (8) et à la moitié inférieure de la cuve cylindrique (1).

## Patentansprüche

1. Zylindrischer Tankbehälter zum Transport von Feinprodukten, dadurch gekennzeichnet, daß er an der oberen Hälfte seines vorderen Endes zwischen dem zylindrischen Kesselteil (1) und dem normalisierten gewölbten Kesselabschluß (2) einen Ansatz (8) in Form eines spitz zulaufenden Kesselschusses besitzt, der durch Ausschneiden und entsprechender Nachbearbeitung des entsprechenden Unterteils desselben Kesselzylinders (1) gewonnen wird.

2. Verfahren zur Herstellung eines zylindrischen Tankbehälters nach Patentanspruch 1, dadurch gekennzeichnet, daß er darin besteht, einen spitz zulaufenden Kesselschuß (8) aus der unteren Hälfte des zylindrischen Kessels (1) auszuschneiden und nach entsprechender Bearbeitung des Kesselschusses (8) diesen zwischen der oberen Hälfte des Endes des zylindrischen Kesselteils (1) und dem normalisierten gewölbten Kesselabschluß (2) einzufügen sowie letzteren durch Schweißung mit dem Kesselschuß (8) und der unteren Hälfte des zylindrischen Kesselteils (1) zu verbinden.

## Claims

1. Cylindrical tank or cistern for the bulk conveying of fine products, wherein it comprises at the upper half of its front extremity a gusset (8) disposed between the cylindrical tank (1) and the standardized bulged bottom (2) and constituted by a mitred cut ferrule obtained by cutting the lower half of the same extremity of the cylindrical tank (1) followed by appropriate machining.

2. Method for producing a cylindrical tank according to claim 1, wherein it consists of cutting a ferrule (8) at the lower half of the front extremity of a cylindrical tank (1) and of inserting this ferrule (8), after machining, between the upper edge of this same extremity of the cylindrical tank (1) and a standardized bulged bottom (2), which is fixed by welding to the ferrule (8) and the lower half of the cylindrical tank (1).
